Europäisches Patentamt

European Patent Office

Office européen des brevets

(11) Numéro de publication: **0 372 144**
**A1**

## (12) DEMANDE DE BREVET EUROPEEN

(21) Numéro de dépôt: 88403144.4

(22) Date de dépôt: 09.12.88

(51) Int. Cl.⁵: **B32B 17/10, C03C 27/12**

(43) Date de publication de la demande:
13.06.90 Bulletin 90/24

(84) Etats contractants désignés:
**AT BE CH DE ES GB GR IT LI LU NL SE**

(71) Demandeur: **MORTON THIOKOL, INC.**
**110 North Wacker Drive**
**Chicago Illinois 60606-1560(US)**

(72) Inventeur: **LeMonte, Burges A.**
**26 D'Oultremontlei**
**2130 Brasschaat(BE)**
Inventeur: **Quinn, Frederick A.**
**Gunnison Road**
**Boxford Massachusetts(US)**

(74) Mandataire: **Bonnetat, Christian et al**
**CABINET BONNETAT 23, Rue de Léningrad**
**F-75008 Paris(FR)**

(54) **Vitrage composite présentant des propriétés de résistance aux chocs.**

㉗ Vitrage transparent du type composite et associant une feuille de verre minéral à une feuille d'une résine organique, les deux feuilles étant solidarisées par un liant interstitiel, le vitrage présentant des propriétés de résistance aux chocs lui permettant de constituer une dissuasion en cas d'agression, tout en conservant une épaisseur de l'ordre de 6 millimètres, et à cet effet la feuille de verre minéral présente une épaisseur comprise entre 2,5 et 4 millimètres, la feuille de verre organique choisie parmi les constituants présentant une grande résistance mécanique tels les polycarbonates, les polyarilates, les résines acryliques, présente une épaisseur comprise entre 1 et 2 millimètres et le liant est choisi dans la famille apportant une très haute adhérence tels les polyuréthanes aliphatiques et l'éthylène vinylacétate reticulé (EVA).

# Vitrage composite présentant des propriétés de résistance aux chocs.

La présente invention concerne la réalisation de vitrages composite et formés d'une pluralité de feuilles de matériau divers et assemblés par un liant interstitiel, les vitrages réalisés conformément à l'invention présentant des propriétés intéressantes en ce qui concerne notamment leur résistance mécanique et leurs possibilités de résister à des chocs résultant notamment de tentatives d'effraction.

Les surfaces vitrées équipant un véhicule, notamment un véhicule automobile, ou un bâtiment, représentent une nécessité pour permettre le passage de la luminosité ainsi que la vue sur l'extérieur ; mais les surfaces vitrées interrompant la structure continue (mécaniquement et physiquement résistante) du local, constituent cependant autant de points faibles dans le cas d'une tentative de pénétration par effraction.

Il est clair en effet que le premier point auquel s'attaquera l'auteur d'une tentative d'effraction sera le vitrage lequel est connu pour n'offrir qu'une résistance mécanique faible notamment au choc.

Il en est ainsi tant en ce qui concerne le bâtiment que les véhicules automobiles.

Or si les bâtiments peuvent être équipés de volets et de structures doublant les surfaces vitrées, pour opposer une barrière aux tentatives d'effraction, est beaucoup plus difficile dans le cas de la construction automobile de réaliser une barrière dissuasive notamment au niveau des vitrages.

Or la multiplication des vols et tentatives de vols tant en ce qui concerne le véhicule lui-même que les objets qui peuvent y séjourner, rend de plus en plus nécessaire un renforcement des possiblités de résistance au niveau des vitres et glaces du véhicule.

L'invention intéressera donc sans doute plus particulièrement dans ses applications techniques et économiques l'équipement de véhicules automobiles ; cependant elle n'est pas limitée à cette application et trouvera notamment un domaine d'élection en ce qui concerne la réalisation de vitres et vitrage susceptible d'être incorporée dans des baies fenêtres, portes-fenêtres, etc... d'un bâtiment ou d'un local habité ou non.

Un premier objet de l'invention est donc de réaliser des vitres composites présentant des propriétés considérablement améliorées par rapport aux verres utilisés de façon traditionnelle, sans cependant présenter les handicaps, notamment au niveau du poids et de l'épaisseur, qui jusqu'à présent, limitaient l'intérêt des structures verrières composites visant à offrir des propriétés mécaniques de résistance au choc.

Un autre objet de l'invention sera de permettr la réalisation dans des conditions économiques de structures verrières composites utilisables notamment pour les véhicules automobiles, sans représenter une source de surpoids ni nécessiter une modification des structures, cadres, portières, etc... réceptrices des surfaces vitrées ainsi mises en place.

Un autre objet de l'invention est de permettre l'utilisation de structures verrières présentant des propriétés améliorées non seulement de résistances mais également de transmission thermique.

On connaît diverses formules de vitrage du type "composite" et visant à permettre aux surfaces vitrées de présenter des propriétés de résistance mécanique notamment en cas de tentatives d'effraction.

On connaît ainsi le verre trempé lequel subit un traitement thermique permettant d'améliorer les qualités de la composition verrière par rapport aux verres recuits ordinaires ; le verre trempé n'offre qu'une résistance mécanique extrêmement faible puisqu'il casse sous le premier choc d'un marteau assainé avec une force de l'ordre de 100 à 110 joules.

Pour cette raison le verre trempé n'est pas utilisé comme surface vitrée présentant des propriétés utiles de résistance au choc ; il est utilisé essentiellement pour ses propriétés lui permettant de résister à une tentative de découpage (par exemple au diamant) puisqu'il éclate et il peut donc ainsi être utilisé pour constituer des barrières de détection étant couplé à des relais piezzo électroniques.

Le verre du type "feuilleté" est réalisé à partir de deux couches de verre reliées entre elles par un film synthétique (polyvinylbutyral) ; le verre feuilleté à deux couches résiste légèrement mieux que le verre trempé ; par contre après trois ou quatre chocs au marteau (d'une force de l'ordre de 100 à 110 joules) le verre feuilleté offre alors un trou laissant facilement passer la main et le bras.

On connaît également dans cette famille du type "feuilleté" des vitrages "polyfeuilletés" c'est-à-dire comportant plus de deux couches ou feuilles de verre empilées (avec un film polyvinylbutyral interstitiel entre chaque couche) ; cependant on est rapidement limité par l'épaisseur totale représentée par la superposition des couches : et la résistance globale reste limitée puisque le verre de ce type ne résiste pas au-delà de 7 à 8 coups de marteau (100 à 110 joules) comme indiqué ci-dessus ; étant précisé que dans la suite du présent mémoire descriptif les coups de marteau auxquels il sera fait référence à titre de mesures de résistance aux chocs sont tous situés dans la gamme de force représentée par les valeurs minimales et maximales de 100 à 110 joules.

On connaît des compositions associant une couche de verre minéral à une couche de résine synthétique présentant un indice de réfraction sensiblement voisin de celui du verre (pour éviter toute distorsion dans la transparence du matériau) ; on utilise ainsi des compositions associant le verre à un polycarbonate : le plus souvent on réalise un assemblage verre-polycarbonate-verre qui offre des propriétés de résistance déjà très supérieures à celles qui ont été citées précédemment.

Cependant ces vitrages, comme les verres polyfeuilletés, atteignent une épaisseur égale et souvent supérieure à 10 mm.

Dans ces conditions les structures verrières ainsi réalisées ne sont pas interchangeables et ne peuvent pas remplacer dans les applications traditionnelles et ici considérées à savoir l'équipement automobile et le bâtiment, les verres ordinaires dont l'épaisseur est très inférieure et dont les structures réceptrices (feuillures des fenêtres glissières dans le cas de vitres coulissantes, etc...) ont été prévues et sont normalisées pour des épaisseurs se situant à un niveau généralement inférieur à 6 mm.

On citera également les formules qui sont souvent proposées au grand public, et dans lesquelles un film en matière synthétique par exemple en polyester, est susceptible d'être apposée sur un vitrage sur lequel il adhère grâce à un encollage préalable revêtant une face du film polyester; ces réalisations ne donnent que des résultats médiocres tant en ce qui concerne la transparence du panneau en résultant, qu'en ce qui concerne les caractéristiques mécaniques ainsi obtenues ; l'intérêt de cet assemblage se situant probablement plutôt au niveau de la rétention des morceaux de verre qui restent généralement adhérant légèrement mais de façon suffisante aux films synthétiques en empêchant par conséquent la chute du verre par exemple dans la rue ou en offrant des pointes ou arêtes coupantes au contact lors du choc initial ; mais les surfaces de verre ordinaire revêtues d'un simple film souple de ce genre ne peuvent être considérées comme présentant des propriétés de résistance même simplement initiales à un choc mécanique ; en effet dans le cas d'un choc modéré accidentel le "mariage" verre ordinaire film synthétique notamment polyester peut présenter un intérêt limité ; mais dans le cas d'un choc volontaire asséné par conséquent avec force, l'adhérence entre le verre (alors en morceaux) et le film n'est pas suffisante et les morceaux de verre sous les premiers chocs se détachent; le film subsistant n'offrant plus alors, considéré isolément, qu'une résistance extrêmement limitée.

Dans le cas de l'application des structures verrières ci-dessus à un véhicule automobile, on doit donc constater qu'il n'existe pratiquement pas de solution satisfante actuellement et permettant d'offrir une résistance minimale susceptible de retarder suffisamment la chute ou la suppression totale de la barrière que représente le panneau vitré, pour réaliser un effet dissuasif.

Il est clair en effet que toute structure verrière, si l'on prolonge et multiplie les chocs infligés, finira par céder. Cependant dans la plupart des cas l'auteur d'une tentative d'effraction cherche d'une part la facilité et surtout la discrétion ; de sorte que si la vitre résiste au premier choc et se révèle rebelle à une effraction rapide, elle découragera l'auteur de l'effraction lequel cherchera une "proie" plus facile et dont l'accès sera moins bruyant et par conséquent moins risqué pour lui.

Il existe donc un besoin dans le domaine de l'équipement automobile pour une formulation verrière susceptible de s'insérer dans les armatures les cadres récepteurs traditionnels et classiques, tout en offrant des propriétés dissuasives par une résistance minimale aux chocs, telle que la vitre puisse par exemple résister à au moins dix chocs au marteau répétés.

Dans ces conditions la structure verrière souhaitable sera en fait interchangeable et pourra se substituer aux verres traditionnels utilisés dans la construction automobile sans entraîner d'adaptation et de modification structurelle du véhicule ou sa carrosserie.

Cette formule verrière devra par ailleurs n'entraîner aucun surpoids de façon à ne pas alourdir le véhicule et à ne pas engendrer une modification dans ses caractéristiques et performances (vitesse, accélération, consommation, etc...).

Or il n'existe pas actuellement de formule de vitrage, notamment de vitrage du type composite, répondant à cette préoccupation.

Les compositions associant une couche de verre minéral et une couche d'une feuille de polycarbonate représenteraient la formulation la plus adaptée ; cependant dans les réalisations actuellement connues cet assemblage présente deux inconvénients.

En premier lieu l'épaisseur nécessitée pour l'homogénéité de l'ensemble, au niveau de la feuille de polycarbonate, compte tenu par ailleurs des propriétés des liants interstitiels mis en jeu, aboutit à un ensemble dont l'épaisseur dépasse largement celle tolérable et compatible avec les équipements automobiles actuels (glissière de coulissement des vitres latérales notamment).

On a cherché cependant à réaliser des associations verre minéral feuille de polycarbonate dont la liaison est assurée par des résines ionomères ; cependant l'expérience montre que ces dernières n'assurent qu'une liaison insuffisante entre verre et polycarbonate ; dans ces conditions les premiers chocs provoquent un décollement assez net des deux matériaux et dès lors (comme précédemment décrit pour les feuilles souples polyester), chacun des matériaux séparés ou insuffisamment solidarisés "joue pour lui-même" et l'on ne peut plus alors obtenir l'effet de synergie caractéristique souhaitable des verres composites.

En second lieu la mise en oeuvre d'un assemblage composite verre-polycarbonate, dans les conditions actuellement connues, présente dans le cas des vitres latérales coulissantes, une rayabilité non négligeable entraînée par les mouvements successifs montée et descente de la vitre ; et ces rayures se combinent désagréablement aux rayures accidentelles qui proviennent des chocs ou de contacts d'objets de sorte que la qualité optique de la vitre devient rapidement médiocre voire inadmissible.

En outre il a été constaté que du fait de la faible adhérence entre la feuille polycarbonatée et le verre, on assiste sur les tranches ou les chants du vitrage composite à un décollement des deux éléments, décollement qui constitue une source d'usure des garnitures floquées ainsi que des glissières ou coulisses des vitres mobiles.

La présente invention permet de réaliser des vitrages complexes ou composites (à plusieurs couches associées) susceptibles de s'intégrer dans les structures traditionnelles notamment les portières de véhicules automobiles sans modification des éléments récepteurs, tout en offrant des conditions de fonctionnement satisfaisantes en ce qui concerne les qualités optiques et la mobilité du vitrage ; et la composition de l'invention permet de donner à la surface vitrée ainsi réalisée des propriétés de résistance à l'effraction très supérieures aux formules verrières antérieurement utilisées et permettant de conférer à ces surfaces vitrées des propriétés de "retard à l'effraction" ; sans empêcher totalement une effraction délibérée prolongée, par exemple sur un véhicule totalement isolé, il reste que la nécessité pour l'agresseur de multiplier et répéter les chocs, nécessairement bruyants, représente une dissuasion efficace.

A cet effet l'invention concerne un vitrage transparent du type composite et associant une feuille de verre minéral à une feuille d'une résine organique, les deux feuilles étant solidarisées par un liant interstitiel, le vitrage présentant des propriétés de résistance aux chocs lui permettant de constituer une dissuasion en cas d'agression, et le vitrage est caractérisé en ce que la feuille de verre organique est choisie parmi les constituants à haute tendance et comportant les polycarbonates, les polyarilates, les résines acryliques, et le liant est choisi parmi ceux présentant une très haute adhérence et notamment parmi les polyuréthanes aliphatiques et l'éthylène vinylacétate (EVA).

L'invention concerne plus spécialement un vitrage transparent destiné à constituer une glace pour l'équipement de véhicules notamment de véhicules automobiles et il est caractérisé en ce que l'épaisseur de la feuille de verre minéral est comprise entre 2,5 et 4 mm, l'épaisseur de la feuille de résine organique est comprise entre 1 et 2 millimètres, l'épaisseur du film de liant interstitiel est comprise entre 0,25 et 0,75 millimètres, l'épaisseur totale du vitrage n'excèdant pas 6 millimètres et permettant sa mise en place dans les feuillures et glissières existant et équipant les véhicules automobiles, le nouveau vitrage évitant ainsi de présenter du surpoids pour le véhicule par rapport au vitrage en verre minérale standard.

Selon une autre caractéristique plus particulière, la feuille de résine organique est en polycarbonate et le liant interstitiel est un polyuréthane aliphatique.

Plus spécialement la feuille de polycarbonate comporte sur sa face extérieure (opposée à la face contrecollée sur la feuille de verre) un revêtement anti-abrasion.

Et notamment le revêtement anti-abrasion est à base de mélamine.

Selon encore une autre caractéristique l'invention concerne un vitrage pour l'équipement automobile, vitrage composite conforme aux caractéristiques ci-dessus, et dans lequel la feuille de verre minéral présente une épaisseur inférieure à 3,5, la feuille de résine organique telle que le polycarbonate, comporte une épaisseur inférieure à 2 mm, le liant, constitué d'un polyuréthane aliphatique, comporte une épaisseur maximale de 0,5 millimètre, le vitrage complexe présentant une résistance aux chocs tels qu'ils résistent à au moins 20 coups de marteau consécutifs assénés avec une force comprise entre 100 et 120 joules.

Selon une autre caractéristique le vitrage de l'invention comporte une couche de verre minéral et une couche de résine synthétique, solidarisée par un liant interstitiel, la solidarisation des deux couches extérieures (résine synthétique et verre minéral) le liant interstitiel étant obtenu après insertion du vitrage complexe dans un sac étanche et scellé sous vide et l'ensemble étant soumis à un traitement thermique souspression.

L'invention concerne également un vitrage complexe apte à équiper une baie, fenêtre ou porte pour le bâtiment, la feuille de verre minéral comportant une épaisseur comprise entre 3 et 5 mm, la feuille de résine synthétique comportant une épaisseur comprise entre 2 et 4 mm, le liant interstitiel comportant une épaisseur comprise entre 0,25 et 1 mm, l'épaisseur totale du vitrage n'excèdant pas 10 mm et ce vitrage présente une résistance aux chocs tel qu'il résiste à 100 coups de marteau consécutifs assénés avec une force comprise entre 100 et 120 joules.

Selon une variante le vitrage complexe comporte outre une feuille de verre minéral associée par l'intermédiaire d'un liant à une feuille de résine synthétique, une seconde feuille en verre minéral solidarisée sur la feuille de résine synthétique, celle-ci étant prise en sandwich entre les deux feuilles extérieures en verre minéral, et auxquelles elle est reliée par un film de liant interstitiel.

L'invention concerne également un procédé de préparation de vitrage complexe selon les caractéristiques ci-dessus, et le procédé est caractérisé par la succession des opérations suivantes.

a) on prépare une feuille de verre minéral dont une face est soumise à un traitement "d'accrochage" par une composition constituant un "primaire" ;

b) on rapporte sur la face de la feuille de verre ainsi traitée un liant interstitiel sous forme d'un film.

c) on prépare une feuille d'une résine dont une face est traitée par un produit anti-abrasion et constituée par le dépôt d'un film de résine durcissante tel que la mélamine.

d) on dépose la face non traitée de la feuille de résine synthétique (la face traitée étant donc tournée vers l'extérieur) sur la face libre du film du liant intersticiel lui-même reposant sur la feuille de verre.

e) on place l'ensemble du complexe ainsi réalisé dans un sac en matière souple et étanche formé par exemple d'un film plastique.

f) on fait le vide dans le sac et on referme l'ouverture par exemple par soudure.

g) on place l'ensemble dans un autoclave pour y subir un cycle d'élévation de température sous pression.

h) on retire ensuite du sac le vitrage ainsi réalisé dont les bords et les tranches sont soumis à ébarbage.

De façon plus précise dans le cadre de la mise en oeuvre du procédé ci-dessus, on fait subir à la structure, placée dans le sac sous vide et hermétiquement fermé, un cycle thermique s'étendant sur une durée de 40 à 80 minutes et comportant une première phase de montée en température de 10 à 30 minutes jusqu'à atteindre une température comprise entre 120 et 160°C, on maintient ensuite un palier d'une durée de 10 à 20 minutes à ladite température sous une pression comprise entre 10 et 15 bars ; après quoi une troisième phase de descente en température s'étend sur une durée de 10 à 20 minutes jusqu'au retour à la pression atmosphérique et à la température ambiante.

Et selon une forme plus précise de réalisation, la durée du cycle est de une heure comportant une phase de 20 minutes correspondant à une montée de température et pression jusqu'à un palier de température égale à 140°C et à une pression de 13 bars, paliers s'étendant sur 20 minutes, après quoi le cycle se termine par une phase finale de 20 minutes correspondant au retour à la pression atmosphérique et à la température ambiante.

De préférence et dans le cadre de la mise en oeuvre du procédé ci-dessus, on utilise une feuille de résine constituée d'un polycarbonate associé à un liant interstitiel constitué d'un polyuréthane aliphatique.

Selon une variante de réalisation l'invention concerne également un vitrage équipant un véhicule automobile et à usage de pare-brise et dans lequel sont associées une première feuille de verre d'une épaisseur de 2 à 3 millimètres et de préférence d'une épaisseur de 2,2 millimètres, un film interstitiel de polyuréthane aliphatique d'épaisseur 0,3 millimètre, une feuille de polycarbonate intermédiaire d'une épaisseur comprise entre 0,5 et 1 millimètre, et de préférence 0,8 millimètre, un second film interstitiel de polyuréthane aliphatique, d'une épaisseur de 0,3 millimètre et enfin une deuxième feuille en verre minérale d'une épaisseur comprise entre 2 et 3 millimètres et de préférence d'une épaisseur de 2,8 millimètres, l'ensemble du vitrage composite ayant une épaisseur totale maximum de 6,4 millimètres et présentant une résistance aux chocs tels que il résiste à plus de 20 coups de marteau d'une force comprise entre 100 et 110 joules.

L'invention concerne également un vitrage pour véhicules automobiles caractérisé par une feuille de verre trempée d'une épaisseur de 3 millimètres, un film interstitiel de polyuréthane linéaire de 0,38 millimètres d'épaisseur, et une feuille de polycarbonate d'une épaisseur de 0,8 millimètre dont la face extérieure, opposée au contre-collage sur le verre, a subi un revêtement anti-abrasion par dépôt d'une couche de mélamine, le vitrage présentant une résistance aux chocs tels qu'il résiste à 30 coups de marteau assénés avec une force de 100 à 110 joules.

L'invention concerne enfin dans une variante un vitrage pour le bâtiment comportant un verre minéral d'épaisseur 4 mm, un film EVA d'épaisseur 0,5 millimètre, une feuille de polycarbonate d'épaisseur 4 millimètres, un second film EVA d'épaisseur 0,5 millimètre, et une seconde couche de verre d'épaisseur 4 millimètre, le vitrage présentant une épaisseur totale de 13 millimètres, ce vitrage résistant à 100 coups de marteau assénés avec une force de 100 à 110 joules.

D'autres caractéristiques et avantages de l'invention ressortiront de la description qui suit et qui est donnée en rapport avec diverses formes de réalisation particulières présentées à titre d'exemples.

La présente invention concerne un nouveau vitrage composite "retard à l'effraction", utilisable dans le bâtiment comme dans l'automobile et comportant le collage au verre d'une feuille synthétique peu rayable de haute résistance aux chocs, à l'aide d'un adhésif aux propriétés données lui conférant une grande résistance aux tentatives d'effraction - cette grande résistance étant valable également quand son épaisseur est voisine de celles des vitrages usuels ce qui évite toute modification des feuillures normales d'utilisation.

La feuille synthétique à haute résistance peut être collée sur verre trempé, sur verre recuit ou sur verre feuilleté.

Dans le cas du collage d'une telle feuille, sur verre trempé ou sur verre recuit, cette dernière est toujours disposée à l'intérieur du véhicule ou du bâtiment.

Dans le cas du collage d'une telle feuille dans un vitrage feuilleté, cette feuille à haute résistance est au centre, liée aux deux verres par deux films d'adhésif. Dans ce cas, les problèmes de résistance aux rayures ne se posent pas. Tous les vitrages réalisés selon l'invention que le verre soit recuit, trempé ou feuilleté, résistant au moins à 20 chocs de 100-120 joules - assenés à l'aide d'un marteau avant de laisser le passage d'une main à l'intérieur du batiment ou d'un véhicule. Ces 20 chocs opèrent en 20 ou 25 secondes. L'effet dissuasif est donc très important et ceci pour des vitrages selon l'invention dont l'épaisseur est voisine des vitrages usuels.

Les feuilles synthétiques à haute résistance peuvent être à base de métacrylate de méthyle ou de résine acrylique, ou des films à base de polyarylate, ou encore des films à base de polycarbonate traité antirayure une face. Pour obtenir des vitrages selon l'invention, d'épaisseur voisines des vitrages usuels, l'épaisseur du film de polycarbonate est comprise entre 0,3 et 1 mm. Celle des autres films entre 1 et 1,5 mm.

Dans le cas de l'utilisation des vitrages selon l'invention dans le bâtiment, où on recherche avant tout, une grande résistance, l'épaisseur de la feuille synthétique à haute résistance est voisine ou supérieur à 3 mm. On peut aussi obtenir des vitrages, comme il sera démontré ci-après dans les exemples de réalisation, des résistances supérieures à 100 chocs de force de 150 joules sans percement du vitrage. Les adhésifs pour coller ces feuilles plastiques de haute résistance au verre, doivent avoir des propriétés d'adhérence données, à savoir de résister en traction cisaillement :

à 60 Dan/cm2 à -20°C et à 20°C.

à 20 Dan/cm2 à +60°

à 10 Dan/cm2 à +80°C

Ces propriétés ne doivent pas s'altérer dans le temps. On tolère une baisse de 10% de ces propriétés après 15 jours de vieillissement accéléré, la température variant de -25°C à +65°C où l'humidité relative est à 95% et chacun des cycles étant d'une durée de 4 heures.

Parmi les adhésifs répondant à ces critères on peut citer les polyuréthanes aliphatiques quand le verre est préalablement traité au silane, ou les E.V.A. réticulables à la chaleur ou aux ultra-violets par certains peroxydes.

Cette adhérence verre-adhésif, par exemple, est très forte. Elle diffère donc fondamentalement de l'adhérence du polyvinyl butyral au verre dans la réalisation du pare brise feuilleté, adhérence qui est cinq à six fois inférieure à celle préconisée dans la présente invention.

Pour les vitrages, selon l'invention, dont l'épaisseur est voisine des vitrages usuels, l'épaisseur totale du film plastique à haute résistance et de l'adhésif est comprise entre 1 et 2 mm, en général 1,5 mm. Les vitrages réalisés selon l'invention évitent donc toute modification des feuillures, aussi bien dans le bâtiment que dans l'automobile.

Dans le cas des glaces mobiles d'un véhicule, il n'y a pas lieu de modifier les coulisses de glissement.

Le procédé de réalisation des vitrages composites "retard à l'effraction" selon l'invention s'opère de façon différente des vitrages feuilletés usuels. Le précollage (ou débullage), le collage et la mise en forme de la feuille plastique à haute résistance s'opèrent en une seule opération.

En outre, l'utilisation de films à base d'E.V.A. non seulement simplifie encore davantage ce procédé de réalisation, mais aussi diminue de façon considérable l'investissement nécessaire dans les ateliers.

On a décrit ci-après quelques exemples de réalisation selon l'invention.

Exemple 1

On vise à réaliser une vitre coulissante de véhicule (Peugeot 305) ; cette vitre, avant gauche, est trempée légèrement bombée, son épaisseur est de 3 mm. On la traite avec une solution A1100 d'Union Carbide à 2% dans l'eau. On pulvérise. On sèche. On opère ensuite de la façon suivante :

- assemblage vitre traitée, film polyuréthane (PU) linéaire de 0,38 mm d'épaisseur de la Société Quimal (ce film est au contact de la face traitée du verre, côté intérieur du véhicule), film de polycarbonate de General Electric Plastics (P.C.) d'épaisseur 0,9 mm avec une face traitée anti rayure, côté opposé au collage. On dispose cet assemblage dans un sac en polyamide. On fait le vide. On soude pour assurer l'étanch et maintenir le vide. On place le sac dans un autoclave. La durée du cycle est d'environ 1 heure, à savoir 20 minutes pour la montée en température et pression, 20 minutes de palier à 140°C sous 13 bars ; 20 minutes de descente en température et pression.

On enlève ensuite le vitrage ainsi réalisé du sac. On ébarbe et on polit les arêtes. On dispose ce vitrage sans difficulté dans la portière du véhicule. L'épaisseur PU + PC est de 1,28 mm. L'épaisseur totale du vitrage est de 4,28 mm, ce qui n'entraîne aucune difficulté de montage.

Ce vitrage, selon l'invention, est alors soumis à 20 000 essais de montée et de descente dans la portière. A l'issue de ces essais, on ne constate aucune altération du flocage des coulisses. Aux chocs d'un marteau assénés du même endroit du vitrage avec une force de 100-120 joules, il faut frapper 32 fois, en 30 secondes, pour réussir à presser un trou laissant passer une main à l'intérieur du véhicule. L'effet dissuasif est donc indéniable.

Dès le 1er choc du marteau, le verre trempé casse en une multitude de petits morceaux qui restent fortement adhérents au polycarbonate et maintiennent la forme bombée du vitrage.

De ce fait, le vitrage se présente comme un obstacle difficile à franchir, ce que mettent en évidence les 32 chocs nécessaires pour le percer. Cela est dû à l'importante résistance du polycarbonate mais aussi à l'adhérence exceptionnelle de cet assemblage, mesurée en résistance en traction cisaillement, à 20°C, à 75 Dan/cm2.

Exemple 2

Soit un vitrage pour le batiment composé de la façon suivante :
- 1 verre épaisseur 4 mm
- 1 film EA épaisseur 0,5 mm
- 1 feuille de polycarbonate (non-traité) épaisseur 4 mm
- 1 film EVA épaisseur 0,5 mm
- 1 verre épaisseur 4 mm
dimension du vitrage 110 x 50 cm - épaisseur totale 13 mm.

On réalise l'assemblage comme précédemment : on dispose dans un sac en polyamide, on fait le vide, on soude.

On place le sac dans une étuve à 140°C pendant 45 minutes. On retire le vitrage du sac. Il suffit ensuite de l'ébarber légèrement à la périphérie avant de la disposer dans un feuillure "ad Hoc" de 25 mm.

On ne perce pas ce vitrage, même après 100 coups de marteau assénés de la même façon que celle décrite dans l'exemple 1.

L'adhésif utilisé a une résistance, en traction-cisaillement de 65 Dan/cm2 dans le vitrage ainsi réalisé.

Et surtout, il faut noter que non seulement il n'a pas de traitement du verre avec un "primaire" mais aussi suppression de l'autoclave. Une étuve suffit pour effectuer le collage dans un tel assemblage.

Exemple 3

Réalisation d'un pare brise, selon l'invention, tel celui de la voiture Renault Super 5.
On effectue l'assemblage suivant :
- verre d'épaisseur 2,8 mm (traité au Silane face collage)
- film polyuréthane aliphatique de Quimal 0,3 mm
- film polyarylate 1 mm de Solvay
- film polyuréthane aliphatique de Quimal 0,3 mm
- verre intérieur épaisseur 2,2 mm (traité au silane face collage).

On met en oeuvre le même mode de réalisation que celui décrit dans l'exemple 1.

L'épaisseur totale du vitrage ainsi réalisée est de 6,4 mm. Le pare brise ordinaire a une épaisseur de 5,6 mm. Ce vitrage se pose sans difficulté dans le baie du véhicule. Aux essais de chocs identiques à ceux décrits dans les exemples 1 et 2, ce vitrage résiste jusqu'à 22 coups de marteau. Le pare-brise normal, soumis au même traitement, ne tient qu'à 4 chocs.

L'assemblage verre traité - PU - polyarylate a une résistance, en traction cisaillement à 20°C, de 62 Dan/cm2.

**Revendications**

1 - Procédé de préparation de vitrage complexe de type associant au moins une feuille de verre minéral à une feuille de résine organique telle que le polycarbonate, les deux feuilles étant solidarisées par un liant à haute adhérence choisi dans la famille comportant les polyuréthanes aliphatiques et l'ethylène vinylacétate réticulé (EVA) caractérisé par la succession des opérations suivantes

a) on prépare une feuille de verre minéral dont une face est soumise à un traitement "d'accrochage" par une composition constituant un "primaire" ;

b) on rapporte sur la face de la feuille de verre ainsi traitée un liant interstitiel sous forme d'un film ;

c) on prépare une feuille d'une résine dont une face est traitée par un produit anti-abrasion et constituée par le dépôt d'un film de résine durcissante tel que la mélamine;

d) on dépose la face non traitée de la feuille de résine synthétique (la face traitée étant donc tournée vers l'extérieur) sur la face libre du film du liant interstitiel lui-même reposant sur la feuille de verre ;

e) on place l'ensemble du complexe ainsi réalisé dans un sac en matière souple et étanche formé par exemple d'un film plastique ;

f) on fait le vide dans le sac et on referme l'ouverture par exemple par soudure ;

g) on place l'ensemble dans un autoclave pour y subir un cycle d'élévation de température sous pression, et ce cycle thermique s'étend sur une durée de 40 à 80 minutes et il comporte une première phase de montée en température de 10 à 30 minutes jusqu'à atteindre une température comprise entre 120 et 160° C, on maintient ensuite un palier d'une durée de 10 à 20 minutes à ladite température sous une pression comprise entre 10 et 15 bars ; après quoi une troisième phase de descente en température s'étend sur une durée de 10 à 20 minutes jusqu'au retour à la pression atmosphérique et à la température ambiante ;

h) on retire ensuite du sac le vitrage ainsi réalisé dont les bords et les tranches sont soumis à ébarbage.

2 - Procédé selon la revendication 1, caractérisé en ce que la durée du cycle est de une heure comportant une phase de 20 minutes correspondant à une montée de température et pression jusqu'à un palier de température égale à 140° C et à une pression de 13 bars, paliers s'étendant sur 20 minutes, après quoi le cycle se termine par une phase finale de 20 minutes correspondant au retour à la pression atmosphérique et à la température ambiante.

3 - Procédé selon l'une des revendications 1 ou 2, caractérisé en ce que l'on utilise respectivement une feuille de verre trempé, une feuille de résine constituée d'un polycarbonate associé à un liant interstitiel constitué d'un polyuréthane aliphatique.

4 - Vitrage obtenu par le procédé selon l'une des revendications 1, 2 ou 3 et caractérisé en ce qu'il comporte une feuille de verre trem pé présentant une épaisseur inférieure à 3,5, une feuille de résine organique telle que le polycarbonate, comportant une épaisseur inférieure à 2 mm, le liant, constitué d'un polyuréthane aliphatique, comporte une épaisseur maximale de 0,5 millimètre, le vitrage complexe présentant une résistance aux chocs tel qu'il résiste à au moins 20 coups de marteau consécutifs assénés avec une force comprise entre 100 et 120 joules.

5 - Vitrage selon la revendication 4 et destiné à l'automobile, caractérisé en ce que la feuille de polycarbonate comporte sur sa face extérieure (opposée à la face contrecollée sur la feuille de verre) un revêtement anti-abrasion à base de mélamine.

6 - Vitrage selon l'une des revendications 4 ou 5, caractérisé en ce que le vitrage complexe comporte outre une feuille de verre minéral associée par l'intermédiaire d'un liant à une feuille de résine synthétique, une seconde feuille de verre minéral solidarisée sur la feuille de résine synthétique, celle-ci étant prise en sandwichs entre les deux feuilles extérieures en verre minéral, et auxquelles elle est reliée par un film de liant interstitiel.

7 - Vitrage selon l'une des revendications 4 ou 5, ou 6 équipant un véhicule automobile et à usage de pare-brise et caractérisé en ce qu'il comporte une première feuille de verre trempé d'une épaisseur de 2 à 3 millimètres et de préférence d'une épaisseur de 2,2 millimètres, un film interstitiel de polyuréthane aliphatique d'épaisseur 0,3 millimètre, une feuille de polycarbonate intermédiaire d'une épaisseur comprise entre 0,5 et 1 millimètre, et de préférence 0,8 millimètre, un second film interstitiel de polyuréthane aliphatique, d'une épaisseur de 0,3 millimètre et enfin une deuxième feuille en verre minéral d'une épaisseur comprise entre 2 et 3 millimètres et de préférence d'une épaisseur de 2,8 millimètres, l'ensemble du vitrage composite ayant une épaisseur total maximum de 6,4 millimètres et présentant une résistance aux chocs tels que il résiste à plus de 20 coups de marteau d'une force comprise entre 100 et 110 joules.

8 - Vitrage pour véhicules automobiles selon la revendication 5 ou la revendication 7 caractérisé en ce qu'il est constitué d'une feuille de verre trempé d'une épaisseur de 3 millimètres, un film interstitiel de polyuréthane linéaire de 0.38 millimètre d'épaisseur, et d'une feuille de polycarbonate d'une épaisseur de 0,8 millimètre dont la face extérieure, opposée au contre-collage sur le verre, a subi un revêtement anti-abrasion par dépôt d'une couche de mélamine, le vitrage présentant une résistance aux chocs tels qu'il résiste à 30 coups de marteau assénés avec une force de 100 à 110 joules.

9 - Vitrage pour le bâtiment et obtenu par le procédé conforme à l'une des revendications 1, 2 ou 3, caractérisé en ce qu'il comporte un verre minéral d'épais seur de 4 mm, un film EVA d'une épaisseur 0,5 millimètre, une feuille de polycarbonate d'épaisseur de 4 millimètres, un second film EVA d'une épaisseur de 0,5 millimètre, et une seconde couche de verre d'une épaisseur de 4 millimètres, le vitrage présentant une épaisseur totale de 13 millimètres, ce vitrage résistant à 100 coups de marteau assénés avec une force de 100 à 110 joules.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 364 786 (W.N. SMITH et al.)<br>* Colonne 3, lignes 27-36; colonne 5, ligne 56 - colonne 6, ligne 21; colonne 6, ligne 63 - colonne 7, ligne 9; revendications *<br>--- | 1,3,4,6 | B 32 B 17/10<br>C 03 C 27/12 |
| A | WO-A-8 505 073 (LIBBEY-OWENS)<br>* Revendications *<br>--- | 1 | |
| A | EP-A-0 186 787 (ASAHI GLASS CO.)<br>* Page 6, ligne 4 - page 9, ligne 18; figures 5,6 *<br>--- | 1 | |
| A | US-A-3 666 614 (R.H. SNEDEKER)<br>* Colonne 1, lignes 13-20; colonne 2, lignes 35-54; colonne 4, lignes 1-37,44-46,56-61; colonne 12, lignes 67-75; colonne 13, exemple 1; colonne 14, exemple 5 *<br>--- | 4-6 | |
| A | US-A-3 821 071 (K. DIETZEL)<br>* Colonne 2, lignes 16-28; colonne 3, lignes 33-41; colonne 4, lignes 37-55; colonne 5, lignes 47-66 *<br>--- | 5 | DOMAINES TECHNIQUES RECHERCHES (Int. Cl.5)<br><br>B 32 B<br>C 03 C |
| A | CH-A- 480 945 (BAYER AG et al.)<br>* Colonne 2, ligne 33 - colonne 3, ligne 15; colonne 4, lignes 10-17 *<br>--- | 4,5,7,8 | |
| A | DE-B-1 292 811 (BAYER AG)<br>* Colonnes 5,6; tableau *<br>--- | 5,7,8 | |
| A | EP-A-0 157 645 (PILKINGTON BROTHERS)<br>* Page 4, paragraphe 6; page 12, paragraphe 5 *<br>----- | 5 | |

Le présent rapport a été établi pour toutes les revendications

| Lieu de la recherche | Date d'achevement de la recherche | Examinateur |
|---|---|---|
| LA HAYE | 22-08-1989 | VAN BELLEGHEM W.R. |

CATEGORIE DES DOCUMENTS CITES

X : particuliérement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons
................................................................
& : membre de la même famille, document correspondant

EPO FORM 1503 03.82 (P0402)